# EUROPÄISCHE PATENTSCHRIFT

(11) **EP 2 494 171 B1**
(45) Veröffentlichungstag und Bekanntmachung des Hinweises auf die Patenterteilung: **16.04.2014**
(21) Anmeldenummer: 10752816.8
(22) Anmeldetag: 14.09.2010
(51) Int. Cl.: F02D 9/06, F02D 9/10, F16K 31/04

(54) **STELLVORRICHTUNG FÜR EIN STELLORGAN**
REGULATING DEVICE FOR AN ACTUATOR
DISPOSITIF DE RÉGLAGE POUR ORGANE DE RÉGLAGE

(30) Priorität: 30.10.2009 DE 102009046209
(43) Veröffentlichungstag der Anmeldung: 05.09.2012
(73) Patentinhaber: Robert Bosch GmbH, 70442 Stuttgart (DE)
(72) Erfinder: NAU, Michael, 72175 Dornhan/Aischfeld (DE)
(86) Internationale Anmeldenummer: PCT/EP2010/063440
(87) Internationale Veröffentlichungsnummer: WO 2011/051047

(56) Entgegenhaltungen:
- EP-A2- 1 662 120
- WO-A1-2007/104505
- DE-A1-102008 042 947

## Beschreibung

### Stand der Technik

Die Erfindung geht aus von einer Stellvorrichtung für ein in einem Gasführungskanal einer Brennkraftmaschine angeordnetes Stellorgan, insbesondere für eine in einem Abgasturbolader angeordnete Bypassklappe, nach dem Oberbegriff des Anspruchs 1.

Eine bekannte Stellvorrichtung für eine Bypassklappe im Abgasturbolader einer Brennkraftmaschine (DE 10 2004 056 897 A1) weist ein zwischen dem elektrischen Stellmotor und der Stellwelle angeordnetes, mehrstufiges Getriebe auf, das eine Getriebe-Eingangsstufe, eine nichtlineare Getriebe-Ausgangsstufe und eine zwischen Getriebe-Ein- und -Ausgangsstufe angeordnete Getriebe-Zwischenstufe besitzt. Zur Erzielung einer großen Übersetzungsspreizung, die einen kleinen Elektromotor zur Verstellung der Bypassklappe in akzeptabler Stellzeit ermöglicht, besteht die Getriebe-Zwischenstufe aus einem Antriebsrad und einem mit diesem kämmenden Abtriebsrad, wobei das Antriebsrad mit dem Abtriebsrad der Getriebe-Eingangsstufe auf einer ersten Getriebewelle drehfest angeordnet ist und das Abtriebsrad mit dem Antriebssegment der nichtlinearen Getriebe-Ausgangsstufe drehfest auf einer zweiten Getriebewelle angeordnet ist. Die parallel zur ersten Getriebewelle ausgerichtete zweite Getriebewelle ist eine auf der Stellwelle gleitgelagerte Hohlwelle.

### Offenbarung der Erfindung

Die erfindungsgemäße Stellvorrichtung mit den Merkmalen des Anspruchs 1 hat den Vorteil, dass durch den Einsatz einer Evoloidverzahnung in mindestens einer der Getriebestufen eines eine große Übersetzungsspreizung aufweisenden mehrstufigen Getriebes die Zahl der erforderlichen Getriebestufe unter Beibehaltung der gewünschten maximalen Übersetzung reduziert werden kann. Durch die Reduzierung der Anzahl der Getriebestufen und durch den geringen Achsabstand der miteinander kämmenden Getrieberäder mit Evoloidverzahnung wird eine kompakte Bauform des Getriebes gewonnen. Mit der Evoloidverzahnung lässt sich eine große Übersetzung realisieren, wobei die evoloidverzahnten Getrieberäder eine große Zahnfußfestigkeit besitzen und so einen Beitrag zur Robustheit des Getriebes leisten.

Durch die in den weiteren Ansprüchen aufgeführten Maßnahmen sind vorteilhafte Weiterbildungen und Verbesserungen der im Anspruch 1 angegebenen Stellvorrichtung möglich.

Gemäß einer vorteilhaften Ausführungsform der Erfindung ist eine weitere Getriebestufe als nichtlineare Getriebestufe ausgebildet, die vorzugsweise zwischen der Getriebestufe mit Evoloidverzahnung und der Stellwelle angeordnet ist. Mit einer solchen nichtlinearen Getriebestufe lässt sich in Verbindung mit der Getriebestufe mit Evoloidverzahnung mit nur zwei Getriebestufen eine sehr große Übersetzung von z.B. i=90 erreichen, so dass in der Stellvorrichtung ein leistungsschwacher und damit baukleiner elektrischer Stellmotor eingesetzt werden kann. Durch die kompakte Bauform des Getriebes und den baukleinen Stellmotor wird insgesamt eine Stellvorrichtung erzielt, die einen nur kleinen Einbauraum erfordert. Die erfindungsgemäße Stellvorrichtung ist damit besonders geeignet zum Stellen einer Bypassklappe in Abgasturboladern von Brennkraftmaschinen, da im Abtriebsstrang der Brennkraftmaschinen in der Regel wenig Einbauraum zur Verfügung steht. Die kompakte Bauform der Stellvorrichtung ermöglicht die Anordnung der Stellvorrichtung nahe des Turboladers, so dass ein nur kurzes Hebelgetriebe zur Übertragung der Schwenkbewegung der Stellwelle auf die Bypassklappe im Turbinengehäuse des Turboladers erforderlich ist.

### Kurze Beschreibung der Zeichnungen

Die Erfindung ist anhand eines in den Zeichnungen dargestellten Ausführungsbeispiels in der nachfolgenden Beschreibung näher erläutert. Es zeigen:
- Fig. 1: einen Längsschnitt einer Stellvorrichtung mit elektrischem Stellmotor und mechanischem Getriebe für einen Abgasturbolader einer Brennkraftmaschine,
- Fig. 2: ausschnittweise eine perspektivische Darstellung einer Getriebestufe mit Evoloidverzahnung des Getriebes in Fig. 2,
- Fig. 3: ausschnittweise eine schematisierte Darstellung des Abgasturboladers im Längsschnitt.

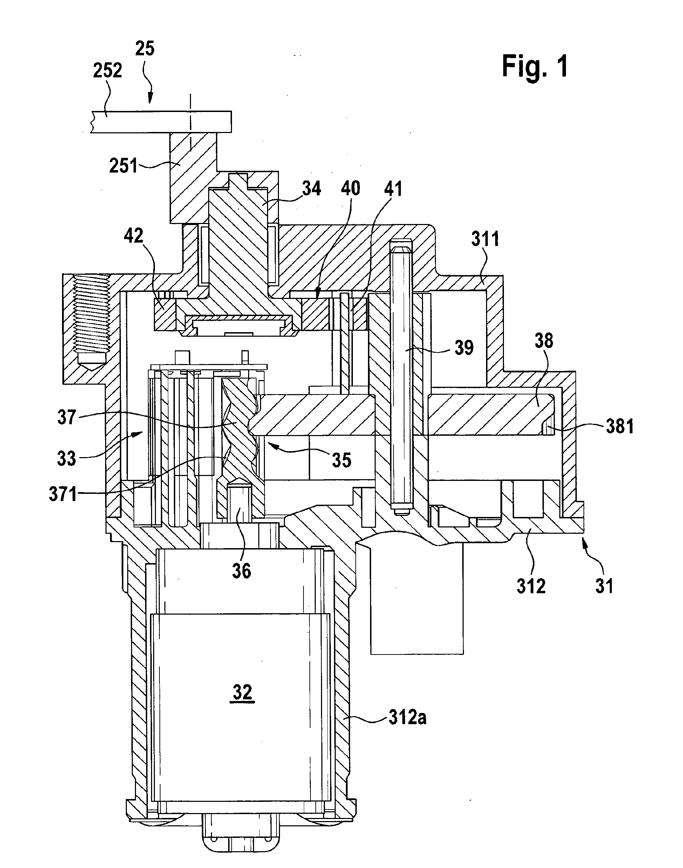

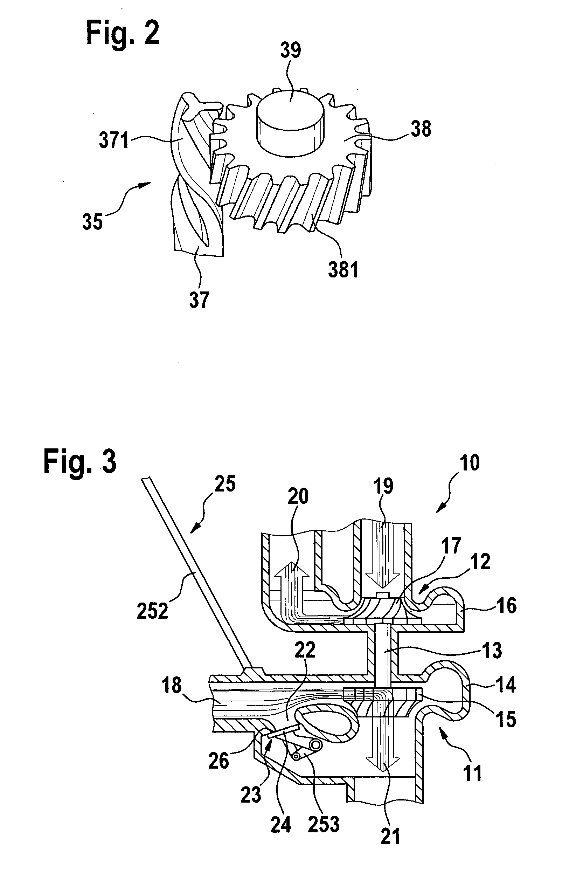

Die in Fig. 1 im Längsschnitt dargestellte Stellvorrichtung für ein Stellorgan, das in einem gasförmiges Medium führenden Kanal, kurz Gasführungskanal, einer Brennkraftmaschine angeordnet ist, wird bevorzugt für einen Abgasturbolader 10 verwendet, wie er schematisiert und ausschnittweise in Fig. 3 dargestellt ist. Alternativ kann die Stellvorrichtung auch zur Verstellung einer Drosselklappe im Luftansaugtrakt der Brennkraftmaschine eingesetzt werden oder als Aktuator in einem Abgasrückführventil dienen.

Abgasturbolader sind bekannt und beispielsweise in Bosch "Kraftfahrttechnisches Taschenbuch" ISBN-3-528-23876-3, Seite 532 ff. beschrieben. Der Abgasturbolader 10 besteht aus zwei Strömungsmaschinen, einer Turbine 11 und einem Verdichter 12, die auf einer gemeinsamen Welle 13 angeordnet sind. Die Turbine 11 weist ein in einem Turbinengehäuse 14 angeordnetes Turbinenrad 15 und der Verdichter 12 ein in einem Verdichtergehäuse 16 angeordnetes Verdichterrad 17 auf. Das Turbinenrad 15 wird von dem zuströmenden Abgas 18 angetrieben, und das vom Turbinenrad 15 angetriebene Verdichterrad 17 saugt atmosphärische Frischluft 19 an und bläst vorverdichtete Frischluft 20 in die Brennräume der Brennkraftmaschine ein. Das das Turbinenrad 15 verlassende, abströmende Abgas 21 tritt aus dem Turbinengehäuse 14 aus.

Damit bei Brennkraftmaschinen wegen der großen Drehzahlspreizung eine sinnvolle Drehmomentauslegung erreicht werden kann, ist eine Ladedruckregelung vorgesehen, um den maximal zulässigen Ladedruck einzuhalten. Dabei wird der gewünschte Ladedruck durch eine abgasseitige Leistungsregelung der Turbine 11 erzielt. Hierzu ist im Turbinengehäuse 14 ein Bypass 22 vorgesehen, über den ein Teil des zuströmenden Abgases 18 an dem Turbinenrad 15 vorbeigeleitet und direkt mit dem abströmenden Abgas 21 abgeführt wird. Der Bypass 22 wird durch ein Stellorgan in Form einer Bypassklappe 24 gesteuert. Das Stellorgan 23 bzw. die Bypassklappe 24 wird über einen Hebelmechanismus 25, von dem in Fig. 3 ein Sekundärhebel 253 und teilweise ein Verbindungshebel 252 zu sehen sind, von der Stellvorrichtung gemäß Fig. 1 betätigt.

Die in Fig. 1 im Längsschnitt dargestellte Stellvorrichtung weist ein zweiteiliges Stellergehäuse 31 auf, das aus einem topfförmigen Grundkörper 311 und einem den Grundkörper 311 abdeckenden Deckel 312 besteht. Am Deckel 312 ist ein Schacht 312a einstückig angeformt, in den ein elektrischer Stellmotor 32 mit einer in den Grundkörper 311 hineinragenden Abtriebswelle 36 eingesetzt ist. Im Grundkörper 311 ist ein zweistufiges Getriebe 33 angeordnet, über das der Stellmotor 30 eine Stellwelle 34 antreibt. Die aus dem Grundkörper 311 austretende Stellwelle 34 ist mit einem Primärhebel 251 des Hebelmechanismus 25 gekoppelt.

Von den beiden Getriebestufen weist eine Eingangs-Getriebestufe 35 zwei über eine Evoloidverzahnung zusammenwirkende Getrieberäder auf, wobei das eine Getrieberad ein drehfest auf der Abtriebswelle 36 des Stellmotors 32 sitzendes Ritzel 37 mit Evoloidzähnen 371 und das andere Getrieberad ein drehbar auf einer Welle 39 sitzendes Stirnrad 38 mit zur Zahnradachse geschrägten Evoloidzähnen 381 ist. In Fig. 2 sind Ritzel 37 und Stirnrad 38 perspektivisch dargestellt. Das Ritzel 37 hat maximal drei Evoloidzähne 371, die so geschrägt sind, dass immer jeweils mindestens ein Evoloidzahn 371 in die Evoloidverzahnung am Stirnrad 38 eingreift. Eine zwischen der Eingangs-Getriebestufe 35 und der Stellwelle 34 angeordnete Ausgangs-Getriebestufe 40 ist zur Erzielung einer weiteren Übersetzunkspreizung als nichtlineare Getriebestufe ausgebildet, die ihrerseits die Stellwelle 34 beaufschlagt. Die nichtlineare Getriebe-Ausgangsstufe 40 kann beispielsweise so ausgeführt sein, wie dies in der DE 10 2004 056 897 A1 dargestellt und beschrieben ist. Sie umfasst ein von dem Stirnrad der Getriebe-Eingangsstufe 35 angetriebenes Antriebssegment 41 und ein mit der Stellwelle 34 gekoppeltes Abtriebssegment 42, die sich mit ihren Außenverzahnungen auf Wälzkurven abwälzen, deren Wälzkurvenradien sich über den Drehbereich der Segmente 41, 42 stetig ändern.

Über die beiden Getriebestufen 35, 40 wird die Drehung der Abtriebswelle 36 des Stellmotors 32 mit einem sehr großen Übersetzungsverhältnis auf die Stellwelle 34 übertragen, die den Primärhebel 251 des Hebelmechanismus 25 in einem Schwenkbereich von z.B. ca. 140° schwenkt, wobei nach maximaler Schwenkung der Bypass 22 im Turbinengehäuse 14 geschlossen ist. Mit den beiden Getriebestufen 35, 40 kann ein sehr großes Übersetzungsverhältnis, z.B. i=90, realisiert werden, so dass zur Schwenkung der Stellwelle 34 ein nur leistungsschwacher, baukleiner elektrischer Stellmotor 32 erforderlich ist, der über die Getriebeübersetzung ein ausreichend hohes Drehmoment erzeugt, um die Bypassklappe 24 mit Dichtsitz gegen den Druck des zuströmenden Abgases 18 an einem Anschlag 26 anzupressen, an den sich die Bypassklappe 24 bei geschlossenem Bypass 22 anlegt.

## Patentansprüche

1. Stellvorrichtung einer Bypassklappe (24) eines Abgasturboladers (10), mit einem elektrischen Stellmotor (32), einer mit dem Stellorgan (23) gekoppelten Stellwelle (34) und mit einem zwischen Stellmotor (32) und Stellwelle (34) angeordneten, mehrstufigen Getriebe (33), **dadurch gekennzeichnet, dass** in mindestens einer der Getriebestufen (35) zwei Getrieberäder über eine Evoloidverzahnung zusammenwirken.

2. Stellvorrichtung nach Anspruch 1, **dadurch gekennzeichnet, dass** das eine Getrieberad ein drehfest auf einer Abtriebswelle (36) des Stellmotors (32) sitzendes Ritzel (37) mit Evoloidzähnen (371) und das andere Getrieberad ein drehbar gelagertes Stirnrad (38) mit zur Zahnradachse geschrägten Evoloidzähnen (381) ist.

3. Stellvorrichtung nach Anspruch 2, **dadurch gekennzeichnet, dass** die Zahl der Evoloidzähne (371) des Ritzels (37) maximal drei beträgt.

4. Stellvorrichtung nach einem der Ansprüche 1 bis 3, **dadurch gekennzeichnet, dass** die Getriebestufe mit Evoloidverzahnung eine von der Stellwelle (34) des Stellmotors (32) angetriebene Eingangs-Getriebestufe (35) bildet.

5. Stellvorrichtung nach einem der Ansprüche 1 bis 4, **dadurch gekennzeichnet, dass** das Getriebe (33) eine nichtlineare weitere Getriebestufe aufweist.

6. Stellvorrichtung nach Anspruch 5, **dadurch gekennzeichnet, dass** die nichtliniare Getriebestufe eine die Stellwelle (34) antreibende Ausgangs-Getriebestufe (40) bildet.

7. Stellvorrichtung nach einem der Ansprüche 1 bis 6, **dadurch gekennzeichnet, dass** die Kopplung des Stellorgans (23) mit der Stellwelle (34) mittel eines Hebelmechanismus (25) vorgenommen ist.

8. Stellvorrichtung nach einem der Ansprüche 1 bis 7, **gekennzeichnet durch** ein zweiteiliges Stellergehäuse (31) mit einem Grundkörper (311) und einem diesen verschließenden Deckel (312) und **dadurch**, dass das Getriebe (33) im Grundkörper (311) mit aus diesem vorstehender Stellwelle (34) und der Stellmotor (32) in einem an den Deckel (312) angeformten Schacht (312a) mit aus diesem vorstehender Abtriebswelle (36) aufgenommen ist.

## Claims

1. Regulating device of a bypass valve (24) of an exhaust gas turbocharger (10), with an electric servomotor (32), with a regulating shaft (34) coupled to an actuator (23) and with a multi-stage gear (33) arranged between the servomotor (32) and regulating shaft (34), **characterized in that**, in at least one of the gear stages (35), two gearwheels interact via an evoloid toothing.

2. Regulating device according to Claim 1, **characterized in that** one gearwheel is a pinion (37) seated in a rotationally fixed manner on an output shaft (36) of the servomotor (32) and having evoloid teeth (371), and the other gearwheel is a rotatably mounted spur wheel (38) having evoloid teeth (381) slanted with respect to the gearwheel axis.

3. Regulating device according to Claim 2, **characterized in that** the number of evoloid teeth (371) of the pinion (37) amounts to a maximum of,three.

4. Regulating device according to one of Claims 1 to 3, **characterized in that** the gear stage with evoloid toothing forms an input gear stage (35) driven by the regulating shaft (34) of the servomotor (32).

5. Regulating device according to one of Claims 1 to 4, **characterized in that** the gear (33) has a non-linear further gear stage.

6. Regulating device according to Claim 5, **characterized in that** the non-linear gear stage forms an output gear stage (40) driving the regulating shaft (34).

7. Regulating device according to one of Claims 1 to 6, **characterized in that** the coupling of the actuator (23) to the regulating shaft (34) is carried out by means of a lever mechanism (25).

8. Regulating device according to one of Claims 1 to 7, **characterized by** a two-part actuator housing (31) with a basic body (311) and with a cover (312) closing the latter, and in that the gear (33) is received in the basic body (311), with the regulating shaft (34) projecting out of the latter, and the servomotor (32) is received in a well (312a) integrally formed onto the cover (312), with the output shaft (36) projecting out of the said well.

## Revendications

1. Dispositif de réglage d'un clapet de dérivation (24) d'un turbocompresseur à gaz d'échappement (10), comprenant un moteur de réglage électrique (32), un arbre de réglage (34) accouplé à un organe de réglage (23) et une transmission à plusieurs étages (33) disposée entre le moteur de réglage (32) et l'arbre de réglage (34), **caractérisé en ce que** deux roues de transmission coopèrent dans au moins l'un des étages de transmission (35) par le biais d'une denture évoloïde.

2. Dispositif de réglage selon la revendication 1, **caractérisé en ce que** l'une des roues de transmission est un pignon (37) disposé de marnière solidaire en rotation sur un arbre de sortie (36) du moteur de réglage (32) avec des dents évoloïdes (371) et l'autre roue de transmission est un pignon droit monté à rotation (38) avec des dents évoloïdes (381) en biais par rapport à l'axe de la roue dentée.

3. Dispositif de réglage selon la revendication 2, **caractérisé en ce que** le nombre maximum des dents évoloïdes (371) du pignon (37) est de trois.

4. Dispositif de réglage selon l'une quelconque des revendications 1 à 3, **caractérisé en ce que** l'étage de transmission avec la denture évoloïde forme un étage de transmission d'entrée (35) entraîné par l'arbre de réglage (34) du moteur de réglage (32).

5. Dispositif de réglage selon l'une quelconque des revendications 1 à 4, **caractérisé en ce que** la transmission (33) présente un étage de transmission supplémentaire non linéaire.

6. Dispositif de réglage selon la revendication 5, **caractérisé en ce que** l'étage de transmission non linéaire forme un étage de transmission de sortie (40) entraînant l'arbre de réglage (34).

7. Dispositif de réglage selon l'une quelconque des revendications 1 à 6, **caractérisé en ce que** l'accouplement de l'organe de réglage (23) à l'arbre de réglage (34) est effectué au moyen d'un mécanisme de levier (25).

8. Dispositif de réglage selon l'une quelconque des revendications 1 à 7, **caractérisé par** un boîtier d'actionneur en deux parties (31) comprenant un corps de base (311) et un couvercle fermant celui-ci (312), et en ce que la transmission (33) est reçue dans le corps de base (311) avec l'arbre de réglage (34) faisant saillie hors de celui-ci et le moteur de réglage (32) est reçu dans un gaine (312a) formée au niveau du couvercle (312) avec l'arbre de sortie (36) faisant saillie hors de celle-ci.
